# EUROPÄISCHE PATENTSCHRIFT

(11) **EP 1 900 425 B1**
(45) Veröffentlichungstag und Bekanntmachung des Hinweises auf die Patenterteilung: **03.12.2008**
(21) Anmeldenummer: 07115589.9
(22) Anmeldetag: 04.09.2007
(51) Int. Cl.: B01J 8/18

(54) **Verfahren und Vorrichtung zur kontaminationsfreien Erwärmung von Gasen**
Method and apparatus for the contamination-free heating of gases
Procédé et appareillage pour chauffer des gaz sans contamination

(30) Priorität: 12.09.2006 DE 102006042685
(43) Veröffentlichungstag der Anmeldung: 19.03.2008
(73) Patentinhaber: Wacker Chemie AG, 81737 München (DE)
(72) Erfinder: Fuchs, Paul, 5231 Schalchen (AT); Weidhaus, Dieter, 84489 Burghausen (DE)
(74) Vertreter: Potten, Holger

(56) Entgegenhaltungen:
- WO-A-20/07057314
- DE-A1- 3 910 343
- DE-A1- 19 948 395

## Beschreibung

Die Erfindung betrifft ein Verfahren und eine Vorrichtung zur kontaminationsfreien Erwärmung von Gasen.

Bei der Wirbelschichtabscheidung von hochreinem polykristallinem Silizium wird in einem Reaktor eine Schüttung aus Siliziumpartikel vorgelegt, diese Schüttung wird durch ein Gas fluidisiert und durch eine geeignete Vorrichtung auf die für die Abscheidereaktion notwendige Temperatur aufgeheizt. Eine im Gas enthaltene siliziumhaltige Verbindung, im Allgemeinen Silan oder ein Halogensilan (SiHₓHg₄₋ₓ, Hg: Halogen, X= 1-3) zersetzt sich an den heißen Partikeloberflächen in einer Pyrolysereaktion unter Bildung von elementarem Silizium, welches sich auf der Oberfläche der Siliziumpartikel niederschlägt und zu einem Größenwachstum der Partikel führt. Das Verfahren kann kontinuierlich betrieben werden, wenn man laufend angewachsende Partikel als Produkt aus der Wirbelschicht abführt und Partikel geringerer Größe, so genannte Siliziumkeimpartikel, der Wirbelschicht zuführt. Ein solches Verfahren ist beispielhaft in DE 199 48 395 A1 beschrieben.

Der Nettoheizbedarf der Wirbelschicht ergibt sich bei diesen Verfahren größtenteils aus der Differenz zwischen Wirbelschichttemperatur und Temperatur der zugeführten Gase, die Reaktionsenthalpie der Gasphasenabscheidung ist dagegen von untergeordneter Bedeutung. Die Wirbelschichttemperatur entspricht der erforderlichen Reaktionstemperatur für die Pyrolysereaktion und hängt stark ab von der Art und Konzentration der siliziumhaltigen Verbindung. Beim Einsatz von Silan oder Chlorsilanen, z. B. Trichlorsilan, wird üblicherweise noch ein siliziumfreies Gas, wie z. B. Wasserstoff, zur Verdünnung eingesetzt. Die für die Abscheidereaktion mindestens erforderliche Wirbelschichttemperatur steigt, ausgehend von Silan, mit steigendem Chlorgehalt der eingesetzten siliziumhaltigen Verbindung stark an und liegt zwischen ca. 500°C und 1200°C.

Es ist nun nahe liegend, die Gase vor Eintritt in die Wirbelschicht auf die Wirbelschichttemperatur vorzuheizen und damit den Heizbedarf für die Wirbelschicht gering zu halten. Allerdings ist eine solche Vorheizung bei siliziumhaltigen Gasen bzw. Gasgemischen, die diese Verbindungen enthalten durch die jeweilige Zersetzungstemperatur der siliziumhaltigen Gase begrenzt. Strömt das siliziumfreie Verdünnungsgas, z. B. Wasserstoff, separat in die Wirbelschicht, könnte dieses theoretisch sogar bis über die Wirbelschichttemperatur erhitzt werden, um damit die Wirbelschicht zu beheizen. Insbesondere bei sehr hohen Temperaturen besteht jedoch sowohl bei der Vorwärmung der siliziumhaltigen Gase als auch bei der Vorwärmung des siliziumfreien Verdünnungsgases die Gefahr einer potentiellen Kontamination durch die Vorrichtung zur Vorwärmung. Diese ist z. B. gegeben beim Einsatz von metallischen Heizelementen aus z. B. Tantal, Molybdän oder Kanthal-Legierung wie er in US 6,827,786 B2, Spalte 18, Zeilen 57ff für die Vorwärmung von Wasserstoff auf 1300°C für die Wirbelschichtabscheidung beschrieben ist. Nachteiligerweise kommt es dabei durch die innige Berührung mit der Oberfläche der Heizelemente zu einer Kontamination des Gases. Die Oberfläche der Heizelemente besteht aus Metall, welches das zu erwärmende Gas verunreinigt. Zudem kommt es auch durch die im Metall der Heizelemente vorhandenen Verunreinigungen zu einer weiteren Verunreinigung des zu erwärmenden Gases. Der Grad der Verunreinigung des Gases steigt mit zunehmender Temperatur der metallischen Heizelemente an.

Aufgabe der Erfindung war es, ein Verfahren zur kontaminationsfreien Erwärmung von hochreinen Gasen, vorzugsweise von Gasen, die für die Wirbelschichtabscheidung von hochreinem polykristallinem Silizium genutzt werden, auf eine Temperatur von 300 bis 1200°C zur Verfügung zu stellen.

Die Aufgabe wird gelöst durch ein Verfahren, welches dadurch gekennzeichnet ist, dass das hochreine Gas bei einem Druck von 0,1 bis 10 bar abs. über einen hochreinen Feststoff, der das Gas nicht verunreinigt und nicht mit dem Gas reagiert, geleitet wird, wobei sich der Feststoff in einem hochreinen Behälter befindet, dessen Wand aus einem Werkstoff besteht, welcher für Infrarotstrahlen zu mehr als 85 % durchlässig ist und der Behälter mit dem Feststoffgranulat, -bruchstücken oder - formteilen so vollständig gefüllt ist, dass der Feststoff unbeweglich im Behälter vorliegt und vom zu erhitzenden Gas umspült werden kann und der Behälter mittels der Infrarotstrahlen bestrahlt wird, dadurch der Feststoff erhitzt wird und dieser das Gas erhitzt.

Unter einem hochreinen Gas ist im Sinne der Erfindung zu verstehen, dass das Gas weniger als 10 ppm (Volumen) als Summe aller Nebenbestandteile (Verunreinigungen) enthält. Bei den Nebenbestandteilen handelt es sich beispielsweise im Falle von hochreinem Wasserstoff in der Regel um Kohlenmonoxid, Kohlendioxid, Kohlenwasserstoffe, Stickstoff, Edelgase (in der Regel Ar oder He), Sauerstoff und Feuchte (H₂O).

Im Sinne der vorliegenden Erfindung wird ein Gas auch dann nicht verunreinigt, wenn die in das Gas abgegebenen Bestandteile des Feststoffs eine nachfolgende Reaktion, bei der das Gas zugegen ist, nicht beeinträchtigen, d.h. das Reaktionsprodukt der nachfolgenden Reaktion nicht kontaminieren. Besonders bevorzugt wird ein Gas nicht verunreinigt, wenn keine Bestandteile des Feststoffs an das Gas abgegeben werden.

Vorzugsweise handelt es sich bei dem Feststoff um Silizium, welches weniger als 100 ppm (Gewicht) an Verunreinigung in Summe aufweist, SiC, welches weniger als 100 ppm (Gewicht) an Verunreinigung in Summe aufweist, oder Si₃N₄, welches weniger als 100 ppm (Gewicht) an Verunreinigung in Summe aufweist. Besonders bevorzugt handelt es sich bei dem Feststoff um hochreines polykristallines Silizium.

Der Feststoff wird mittels eines oder mehrerer Heizstrahler erwärmt. Vorzugsweise sind mehrere Heizstrahler gleichmäßig über den Umfang des Behälters verteilt, um einen möglichst gleichmäßigen Eintrag der Wärmeenergie zu erzielen. Die Temperatur und damit die Wellenlänge des Heizstrahlers ist so ausgewählt, dass 85% oder mehr der Strahlungsenergie die Behälterwand passiert und in dem Feststoff zu Wärme umgesetzt wird und 15 % oder weniger der Strahlungsenergie von der Behälterwand absorbiert wird.
Die Erwärmung der Gase erfolgt bei einem Druck von 0,1 bis 10 bar abs., vorzugsweise bei einem Druck von 1 bis 10 bar abs.

Vorzugsweise eignet sich das erfindungsgemäße Verfahren zum Vorwärmen von Gasen für die Wirbelschichtabscheidung von hochreinem polykristallinem Silizium. Solche Gase sind z. B. Silan, Halogensilane, insbesondere Chlorsilane, wie z. B. Trichlorsilan, ein siliziumfreies Gas, welches in der Wirbelschichtabscheidung als Trägergas dienen kann, wie z. B. Wasserstoff sowie Mischungen aus diesen Gasen.

In dieser Verfahrensvariante wird als Feststoff vorzugsweise hochreines polykristallines Silizium in Form von Granulat oder Bruchstücken eingesetzt. Das Gas, vorzugsweise reiner Wasserstoff bzw. ein Gemisch aus Wasserstoff und Trichlorsilan wird auf eine Temperatur von 300°C bis 1200°C (reiner Wasserstoff) bzw. auf 300°C bis 400°C (Gemisch aus Wasserstoff und Trichlorsilan) erhitzt.

Vorzugsweise werden 50 bis 500 m³/h der genannten Gase durch den mit Siliziumbruch oder Siliziumgranulat gefüllten Behälter geleitet.

Das erfindungsgemäße Verfahren erlaubt es, siliziumhaltige Gase oder Gasgemische, die ein siliziumhaltiges Gas enthalten, bis nahe an die Zersetzungstemperatur der siliziumhaltigen Verbindung ohne Verunreinigung zu erhitzen. Siliziumfreie Gase, wie z. B. Wasserstoff, können durch das Verfahren sogar bis über die erforderliche Wirbelschichttemperatur auf bis zu 1200°C kontaminationsfrei erhitzt werden.

Eine weitere Aufgabe der Erfindung war es, eine Vorrichtung zur Verfügung zu stellen, die zur Durchführung des erfindungsgemäßen Verfahrens geeignet ist.

Diese Aufgabe wird gelöst durch eine Vorrichtung umfassend einen Behälter mit einer Einlassöffnung für ein Gas und einer Auslassöffnung für das erwärmte Gas sowie Heizstrahler, welche den Behälter mit Infrarotstrahlen bestrahlen können, wobei der Behälter aus einem hochreinen Werkstoff besteht, welcher das Gas nicht verunreinigt und der für Infrarotstrahlen zu mehr als 85 % durchlässig ist und der Behälter mit einem hochreinen Feststoff, der das Gas nicht verunreinigt, so vollständig gefüllt ist, dass der Feststoff unbeweglich im Behälter vorliegt und vom zu erhitzenden Gas umspült werden kann und der Feststoff mittels der Infrarotstrahlen erhitzt werden kann.

Der Feststoff liegt in Form von Granulat, Formteilen oder Bruchstücken vor. Der Feststoff besteht aus einem hochreinen Werkstoff, der das Gas nicht verunreinigt und nicht mit dem Gas reagiert. Zum Erhitzen von Wasserstoff bzw. Gemischen aus Wasserstoff und Chlorsilanen, wie sie für die Wirbelschichtabscheidung von hochreinem polykristallinem Silizium notwendig ist, wird vorzugsweise Silizium, SiC oder Si₃N₄, welches jeweils weniger als 100 ppm (Gewicht) an Verunreinigung in Summe aufweist, eingesetzt. Besonders bevorzugt handelt es sich bei dem Feststoff um hochreines polykristallines Silizium. Unter hochreinem polykristallinem Silizium ist im Sinne der Erfindung vorzugsweise polykristallines Silizium zu verstehen, welches höchstens 100 ppbw an metallischen Verunreinigungen, 1000 ppba an Kohlenstoff, 5 ppba an Akzeptoren (v.a. Bor und Aluminium) und 2 ppba an Donatoren (v.a. Phosphor und Arsen) enthält (w steht für Gewichtsanteil, a für atomaren Anteil).

Vorzugsweise hat der Behälter ein Volumen von 0,01 bis 0,1 m³. Bei dem Behälter handelt es sich vorzugsweise um ein Gefäß aus Quarzglas, bevorzugt Quarzglas in Halbleiterqualität, wie z. B. HSQ-300 der Firma Heraeus. Das Gefäß hat vorzugsweise die Form eines Zylinders bzw. Rohres, wobei dann der Heizstrahler außen angeordnet ist. In einer anderen Ausführungsform ist der Behälter der Innenraum zwischen zwei konzentrischen Zylindern bzw. Rohren. In dieser Ausführungsform befindet sich der Feststoff im Raum zwischen dem inneren und dem äußeren Zylinder bzw. Rohr. In dieser Ausführungsform ist der Infrarotstrahler innerhalb des inneren Zylinders bzw. Rohres und/oder außerhalb des äußeren Zylinders bzw. Rohres angeordnet.

Als Heizstrahler werden vorzugsweise Infrarotstrahler mit einer Heizwendeltemperatur von 800 bis 2700°C, bevorzugt von 1500 bis 2700°C, besonders bevorzugt von 1800 bis 2700°C verwendet. Bei Temperaturen größer 2000°C liegt ca. 90 % der Strahlungsleistung im Wellenlängenbereich von 0,3 bis 3 µm. Bei dieser Wellenlänge wird bei einem Quarzrohr von z. B. 5 mm Dicke nicht mehr als 10 % der Strahlungsleistung im Quarzrohr in Wärme umgesetzt. Der größere Anteil von ca. 90 % (Wellenlänge 0,3 bis 3 µm) durchstrahlt das Quarzrohr verlustfrei und wird in den zu erwärmenden Festkörpern in Wärme umgesetzt. Vorzugsweise hat der einzelne Heizstrahler eine Strahlungsleistung von 0,5 bis 10 kW.

Die Behältergröße, die installierte Heizleistung und die Form und Größe des Feststoffes kann an die jeweilige Durchsatzmenge an Gas und die erforderliche Endtemperatur des Gases angepasst werden. Auch das Verschalten mehrerer der erfindungsgemäßen Gaserhitzer in Reihe oder parallel ist möglich.

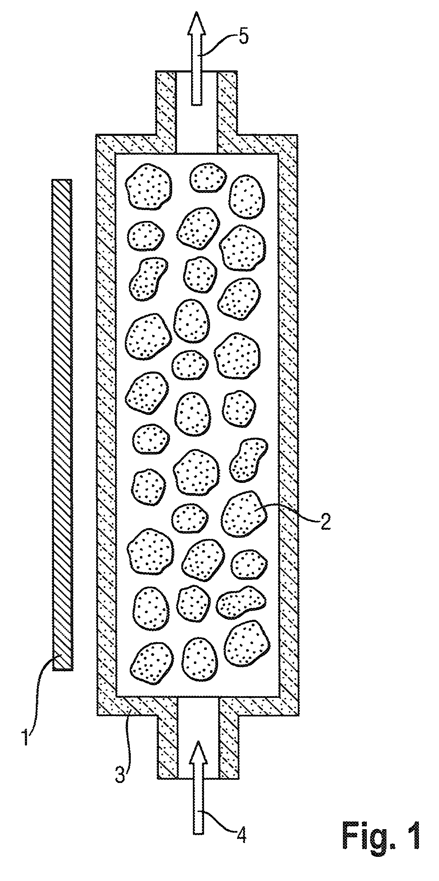

Figur 1 zeigt eine Ausführungsform der erfindungsgemäßen Vorrichtung zur Gaserhitzung als Schnittansicht durch den Behälter. Ein Infrarotstrahler (1) befindet sich außerhalb der Quarzglaswand (3) eines Behälters, welche die Bruchstücke aus hochreinem polykristallinen Silizium (2) von dem Infrarotstrahler (1) trennt. Das hochreine Gas strömt vorzugsweise von unten (4) in den Quarzglasbehälter ein. Auf der gegenüberliegenden Seite (5) strömt das erhitzte Gas ab.

Das folgende Beispiel dient der weiteren Erläuterung der Erfindung:

In einem Quarzglasrohr mit einem Innendurchmesser von 114 mm wurde eine Schüttung aus 15,6 kg Reinstsilizium-Bruchstücken einer Größe von 15 mm bis 30 mm vorgelegt. Um das Quarzrohr wurden mehrere kurzwellige IR-Lampen (Wendeltemperaturen von 1800 bis 2400°C) mit einer max. Gesamtleistung von 26 kW angeordnet. Durch die Schüttung wurde ein Durchsatz von 75 Nm³/h an Reinstwasserstoff eingestellt, der mit einer Temperatur von 120°C in das Quarzrohr strömte. Der Systemdruck betrug 2,9 bar absolut. Die Infrarotstrahler wurden schrittweise bis auf Maximalleistung hochgefahren. Als Endtemperatur erreichte der vom Quarzrohr abströmende Wasserstoff 936°C. Der so vorgewärmte Wasserstoff wurde einem Wirbelschichtreaktor zur Herstellung von polykristallinem Reinstsilizium-Granulat zugeführt. Durch die Vorwärmung des Wasserstoffes konnte die Reaktorheizung um 21 kW zurückgefahren werden. Anhand der Qualitätsdaten des produzierten Siliziumgranulats konnte ein negativer Einfluss der Gasvorwärmung auf die Herstellung von polykristallinem Reinstsilizium-Granulat ausgeschlossen werden.

## Patentansprüche

1. Verfahren zur kontaminationsfreien Erwärmung eines hochreinen Gases auf eine Temperatur von 300 bis 1200°C, welches **dadurch gekennzeichnet ist, dass** das hochreine Gas bei einem Druck von 0,1 bis 10 bar abs. über einen hochreinen Feststoff, der das Gas nicht verunreinigt, geleitet wird, wobei sich der Feststoff in einem hochreinen Behälter befindet, dessen Wand aus einem Werkstoff besteht, welcher für Infrarotstrahlen zu mehr als 85 % durchlässig ist und der Behälter mit dem Feststoffgranulat, -bruchstücken oder - formteilen so vollständig gefüllt ist, dass der Feststoff unbeweglich im Behälter vorliegt und vom zu erhitzenden Gas umspült werden kann und der Behälter mittels der Infrarotstrahlen bestrahlt wird, dadurch der Feststoff erhitzt wird und dieser das Gas erhitzt.

2. Verfahren gemäß Anspruch 1, **dadurch gekennzeichnet, dass** der Feststoff ausgewählt ist aus der Gruppe Silizium, SiC und Si₃N₄, welches weniger als 100 ppm (Gewicht) an Verunreinigung in Summe aufweist.

3. Verfahren gemäß Anspruch 1 oder 2, **dadurch gekennzeichnet, dass** hochreines polykristallines Silizium als Feststoff eingesetzt wird.

4. Verfahren gemäß Anspruch 1, 2 oder 3, **dadurch gekennzeichnet, dass** das Verfahren bei einem Druck von 1 bis 10 bar abs durchgeführt wird.

5. Verfahren gemäß einem der Ansprüche 1 bis 4 **dadurch gekennzeichnet, dass** das zu erhitzende Gas ein Gas ausgewählt aus der Gruppe Silan, Halogensilan und Wasserstoff ist.

6. Verfahren gemäß Anspruch 3, 4 oder 5 **dadurch gekennzeichnet, dass** das zu erhitzende Gas Wasserstoff ist, welcher auf 300°C bis 1200°C kontaminationsfrei erhitzt wird.

7. Verfahren gemäß Anspruch 3, 4 oder 5 **dadurch gekennzeichnet, dass** das zu erhitzende Gas ein Gemisch aus Wasserstoff und Trichlorsilan ist, welches auf 300°C bis 400°C kontaminationsfrei erhitzt wird.

8. Verfahren gemäß Anspruch 1 bis 7, **dadurch gekennzeichnet, dass** 50 bis 500 m³/h des Gases durch den Behälter geleitet wird.

9. Vorrichtung zur kontaminationsfreien Erwärmung eines Gases umfassend einen Behälter mit einer Einlassöffnung für ein Gas und einer Auslassöffnung für das erwärmte Gas, sowie einen Heizstrahler, welcher den Behälter mit Infrarotstrahlen bestrahlen kann, **dadurch gekennzeichnet, dass** der Behälter aus einem hochreinem Werkstoff besteht, welches das Gas nicht verunreinigt und das für Infrarotstrahlen zu mehr als 85 % durchlässig ist und der Behälter mit einem hochreinen Feststoff, der das Gas nicht verunreinigt, so vollständig gefüllt ist, dass der Feststoff unbeweglich im Behälter vorliegt und vom zu erhitzenden Gas umspült werden kann und der Feststoff mittels der Infrarotstrahlen erhitzt werden kann.

10. Vorrichtung gemäß Anspruch 9, **dadurch gekennzeichnet, dass** der Feststoff ausgewählt ist aus der Gruppe Silizium, SiC und Si₃N₄, welches jeweils weniger als 100 ppm (Gewicht) an Verunreinigung in Summe aufweist.

11. Vorrichtung gemäß Anspruch 9 oder 10, **dadurch gekennzeichnet, dass** der Behälter ein Volumen von 0,01 bis 0,1 m³ aufweist.

12. Vorrichtung gemäß Anspruch 9, 10 oder 11, **dadurch gekennzeichnet, dass** der Behälter ein Gefäß aus Quarzglas ist.

13. Vorrichtung gemäß einem der Ansprüche 9 bis 12, **dadurch gekennzeichnet, dass** der Heizstrahler ein Infrarotstrahler mit einer Heizwendeltemperatur von 800 bis 2700°C ist.

## Claims

1. Method for the contamination-free heating of a highly pure gas to a temperature of from 300 to 1200°C, which method is **characterized in that** the highly pure gas is passed at a pressure of from 0.1 to 10 bar abs. over a highly pure solid which does not contaminate the gas, the solid being present in a highly pure container whose wall consists of a material which has a transparency of more than 85% for infrared rays and the container being filled with the solid granules, fragments or shaped articles so completely that the solid is immobile in the container and the gas to be heated can flow around said solid and the container being irradiated by means of the infrared rays, the solid being heated thereby and said solid heating the gas.

2. Method according to claim 1, **characterized in that** the solid is selected from the group consisting of silicon, SiC and Si₃N₄, which has less than 100 ppm (weight) of impurity in total.

3. Method according to claim 1 or 2, **characterized in that** highly pure polycrystalline silicon is used as the solid.

4. Method according to claim 1, 2 or 3, **characterized in that** the method is carried out at a pressure of from 1 to 10 bar abs.

5. Method according to any of claims 1 to 4,
**characterized in that** the gas to be heated is a gas selected from the group consisting of silane, halosilane and hydrogen.

6. Method according to claim 3, 4 or 5, **characterized in that** the gas to be heated is hydrogen, which is heated to 300°C to 1200°C without contamination.

7. Method according to claim 3, 4 or 5, **characterized in that** the gas to be heated is a mixture of hydrogen and trichlorosilane, which mixture is heated to 300°C to 400°C without contamination.

8. Method according to claims 1 to 7, **characterized in that** from 50 to 500 m³/h of the gas is passed through the container.

9. Apparatus for the contamination-free heating of a gas, comprising a container having an inlet orifice for a gas and an outlet orifice for the heated gas, and a radiant heater which can irradiate the container with infrared rays, **characterized in that** the container consists of a highly pure material which does not contaminate the gas and which has a transparency of more than 85% for infrared rays, and the container is filled with a highly pure solid which does not contaminate the gas so completely that the solid is immobile in the container and the gas to be heated can flow around said solid, and the solid can be heated by means of the infrared rays.

10. Apparatus according to claim 9, **characterized in that** the solid is selected from the group consisting of silicon, SiC and Si₃N₄, which in each case has less than 100 ppm (weight) of impurity in total.

11. Apparatus according to claim 9 or 10, **characterized in that** the container has a volume of from 0.01 to 0.1 m³.

12. Apparatus according to claim 9, 10 or 11, **characterized in that** the container is a vessel comprising quartz glass.

13. Apparatus according to any of claims 9 to 12, **characterized in that** the radiant heater is an infrared radiator having a heating coil temperature of from 800 to 2700°C.

## Revendications

1. Procédé pour chauffer, sans contamination, un gaz de haute pureté à une température de 300 à 1200°C, qui est **caractérisé en ce que** le gaz de haute pureté est guidé à une pression de 0,1 à 10 bars abs. sur un solide de haute pureté, qui ne contamine pas le gaz, le solide se trouvant dans un récipient de haute pureté, dont la paroi est constituée par un matériau qui est perméable aux rayons infrarouges à raison de plus de 85% et le récipient étant rempli par le granulat, les morceaux ou les pièces façonnées de solide de manière tellement complète que le solide se trouve de manière immobile dans le récipient et peut être entouré par le gaz à chauffer et le récipient étant irradié par les rayons infrarouges, le solide étant réchauffé par lesdits rayons et le gaz étant chauffé par ledit solide.

2. Procédé selon la revendication 1, **caractérisé en ce que** le solide est choisi dans le groupe formé par le silicium, le SiC et le Si₃N₄, qui contient au total moins de 100 ppm (en poids) d'impuretés.

3. Procédé selon la revendication 1 ou 2,
**caractérisé en ce qu'**on utilise du silicium, polycristallin de haute pureté comme solide.

4. Procédé selon la revendication 1, 2 ou 3, **caractérisé en ce que** le procédé est réalisé à une pression à 1 jusqu'à 10 bars abs.

5. Procédé selon l'une quelconque des revendications 1 à 4, **caractérisé en ce que** le gaz à chauffer est un gaz choisi dans le groupe formé par le silane, l'halogénosilane et l'hydrogène.

6. Procédé selon la revendication 3, 4 ou 5, **caractérisé en ce que** le gaz à chauffer est l'hydrogène, qui est chauffé à 300°C jusqu'à 1200°C sans contamination.

7. Procédé selon la revendication 3, 4 ou 5, **caractérisé en ce que** le gaz à chauffer est un mélange d'hydrogène et de trichlorosilane, qui est chauffé à 300°C jusqu'à 400°C sans contamination. '

8. Procédé selon la revendication 1 à 7, **caractérisé en ce que** 50 à 500 m³/h de gaz sont guidés dans le récipient.

9. Dispositif pour le chauffage, sans contamination, d'un gaz comprenant un récipient avec une ouverture d'entrée pour un gaz et une ouverture d'évacuation pour le gaz chauffé, ainsi qu'un émetteur de chaleur, qui peut irradier le récipient par des rayons infrarouges, **caractérisé en ce que** le récipient est constitué par un matériau de haute pureté, qui ne contamine pas le gaz et qui est perméable aux rayons infrarouges à raison de plus de 85% et le récipient est rempli avec un solide de haute pureté, qui ne contamine pas le gaz, de manière tellement complète que le solide se trouve de manière immobile dans le récipient et peut être entouré par le gaz à chauffer et le solide peut être chauffé au moyen des rayons infrarouges.

10. Dispositif selon la revendication 9, **caractérisé en ce que** le solide est choisi dans le groupe formé par le silicium, le SiC et le Si₃N₄, qui contient au total moins de 100 ppm (en poids) d'impuretés.

11. Dispositif selon la revendication 9 ou 10, **caractérisé en ce que** le récipient présente un volume de 0,01 à 0,1 m³.

12. Dispositif selon la revendication 9, 10 ou 11, **caractérisé en ce que** le récipient est une cuve en verre à quartz.

13. Dispositif selon l'une quelconque des revendications 9 à 12, **caractérisé en ce que** l'émetteur de chaleur est un émetteur d'infrarouges avec une température du filament chauffant de 800 à 2700°C.
